Europäisches Patentamt

(19) European Patent Office

Office européen des brevets

(11) Publication number: **0 192 898**
**B1**

(12) **EUROPEAN PATENT SPECIFICATION**

(45) Date of publication of patent specification: **28.03.90**

(21) Application number: **85309559.4**

(22) Date of filing: **31.12.85**

(51) Int. Cl.⁵: **G 10 L 5/06**

(54) **Speech recognition.**

(30) Priority: **30.01.85 CA 473198**

(43) Date of publication of application:
**03.09.86 Bulletin 86/36**

(45) Publication of the grant of the patent:
**28.03.90 Bulletin 90/13**

(84) Designated Contracting States:
**AT DE FR GB IT NL SE**

(56) References cited:
**EP-A-0 086 589**

**TRANSACTIONS OF THE IECE OF JAPAN, vol.
E-62, no. 7, July 1979, Tokyo, JP; M.
SHIGENAGA et al.: "Speech recognition of
connectedly spoken FORTRAN Programs"
1978 IEEE INTERNATIONAL CONFERENCE ON
ACOUSTICS, SPEECH & SIGNAL PROCESSING,
10th-12th April 1978, Tulsa, Oklahoma, US,
pages 726-730, IEEE, New York, US; S.-I.**

(73) Proprietor: **NORTHERN TELECOM LIMITED
600 de la Gauchetiere Street West
Montreal Quebec H3B 4N7 (CA)**

(72) Inventor: **Lennig, Matthew
2255 Chomeday, No. 15
Montreal Quebec, H3H 2B1 (CA)**
Inventor: **Mermelstein, Paul
6852 Emerson Cote St. Luc
Montreal Quebec, H4W 1G5 (CA)**
Inventor: **Gupta, Vishwa Nath
7145 Messier
Brossard Quebec, J4Y 1T2 (CA)**

(74) Representative: **Crawford, Andrew Birkby et al
A.A. THORNTON & CO. Northumberland House
303-306 High Holborn
London WC1V 7LE (GB)**

(56) References cited:

**NAKAGAWA et al.: "A word recogition method
from a classified phoneme string in the lithan
speech understanding system"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

**RECONNAISSANCE DES FORMES ET INTELLIGENCE ARTIFICIELLE, 12th-14th September 1979, Toulouse, FR, pages 275-283, IRIA, Rocquencourt, FR; J. CAELEN et al.: "Entree accustico-phonemique d'un systeme de reconnaissance de la parole"**

**IEEE TRANSACTIONS ON MILITARY ELECTRONICS, vol. MIL-7, nos. 2/3, April 1963, IEEE, New York, US; T.B. MARTIN et al.: "Application of neural logic to speech analysis and recognition"**

# EP 0 192 898 B1

**Description**

The invention relates to speech recognition.

In known speech recognizers the speech, coded in pulse code modulation (PCM) format, is pre-processed to render it in a form that is more closely related to the way that the human auditory system perceives speech. For example, the speech may be processed to give filter bank energies, cepstra, mel-frequency cepstra, or linear prediction coefficients. Recognition units, for example, words, or syllables, are then compared with each of a series of reference templates representing valid units. The template that is the closest match is deemed to be the unknown unit and the label of the unit corresponding to the template is provided at the output.

Although such recognizers are adequate for certain applications, they are not entirely satisfactory because they give an error rate that is unacceptable in some applications, especially speaker-independent, telephone-based, or large vocabulary applications. This thought to be because the usual representative does not model sufficiently the response of the human auditory system.

"Trans. IECE of Japan, vol E-62, no. 7, 7/79 pp. 446—472" discloses the use of PARCOR coefficients k and their variation.

A method according to the invention is defined in Claim 1 and an apparatus in Claim 6.

Each parameter frame comprises a set of parameters selected according to the type of representation employed, for example filter bank energies, cepstra, mel-based cepstra or linear prediction coefficients.

Preferably, the time difference between centres of said different time frames is from 20 mS to 20 mS, preferably about 50 mS. Conveniently, the secondary parameter is derived from preceding and succeeding primary parameters, for example ±25 milliseconds or ± two frames.

It is also preferable to include a component representing change in amplitude or change in perceptual loudness as a secondary parameter for both the unknown utterance and the reference templates. Such a loudness component is not usually used in the primary parameters since absolute amplitude or absolute loudness is not effective in distinguishing words.

Generally, then, the innovation consists of augmenting the set of primary short-time specific parameters normally used for speech recognition with a set of dynamic secondary parameters representing change in each of the primary parameters over a short time interval (for example, 20 to 200 mS). Use of dynamic parameters in addition to primary parameters renders the distance measure or probability density function used to distinguish speech sounds more sensitive to important phonemic differences as opposed to other, irrelevant, acoustic differences.

Any kind of short-time spectral representation may be used as the set of primary parameters. Examples of such representations include filter bank energies, the cepstrum, the mel-frequency cepstrum, linear prediction coefficients, etc. Each of these representations estimates the magnitude or power spectrum over a time frame (typically between 2 and 50 mS) in terms of a small number of parameters (typically between 3 and 80).

If $P_t$ is the vector of primary parameters computed at time t, time offsets a and b are chosen such that:—

$$20 \text{ mS} \leqq a+b \leqq 200 \text{ mS}$$

the dynamic parameter vector $\Delta P_t$ is defined to be the vector difference

$$\Delta P_t = P_{t+a} - P_{t-b}$$

The invention consists of using the ensemble of parameters $P_t$ together with $\Delta P_t$ to represent the speech signal in the neighbourhood of time t. Probability density functions and distances are then defined in terms of this augmented parameter set consisting of both static (primary) and dynamic (secondary) parameters.

Alternatively, the above derivation may be expressed in terms of frame numbers. If $\Delta t$=the time difference between adjacent frames and if $P_i$=the primary parameter vector at frame i, then the dynamic parameter vector $\Delta P_i$ is defined as the vector difference

$$\Delta P_i = P_{i + \lfloor a/\Delta t \rfloor} - P_{i - \lfloor b/\Delta t \rfloor}$$

Preferably the parameters are mel-based cepstral coefficients in which case the primary coefficients $C_1...,C_n$ represent the spectral shape and the secondary parameters $\Delta C_1,...,\Delta C_m$ represent change in spectral shape during the specified time interval. In addition, $\Delta C_0$ may be included in the set of secondary parameters to represent change in loudness or amplitude.

An embodiment of the invention will now be described by way of example only and with reference to the accompanying drawings, in which:—

Figure 1 is a generalized block diagram of a speech recognizer; and

Figure 2 is a diagram representing the characteristics of a filter means of the speech recognizer.

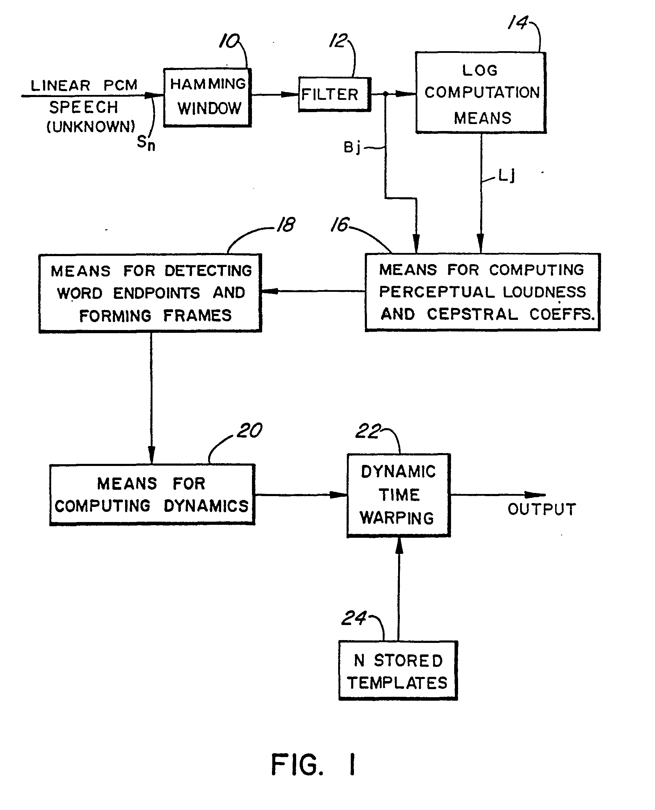

In the speech recognition system illustrated in Figure 1, signal $S_n$ represents a linear pulse-code-modulated (PCM) speech signal, which is the unknown or "input" utterance to be recognized. Signal $S_n$ is

3

applied to window means 10. In the window means 10, the signal $S_n$ is divided into time frames, each of 25.6 milliseconds or 204 samples duration. In operation, each frame is advanced by 12.8 milliseconds or 102 samples so that successive frames overlap by 50 percent. Each time frame is then multiplied point-by-point by a raised cosine function and applied to filter means 12. This Hamming window attenuates spectral sidelobes.

A 256 point Fast Fourier Transform is performed on each time frame and results in a 128 point real power spectrum, $F_1,...,F_N$, where $N=128$.

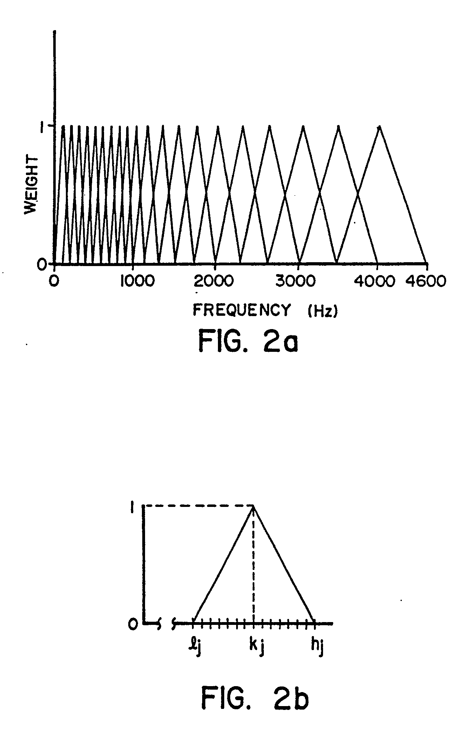

The filter means 12 effectively comprises a filter bank of twenty triangular filters, which determine the energy in a corresponding set of twenty channels spanning the range from about 100 Hz to about 4000 Hz for a PCM sampling rate $f_s$ of 8 KHz. As illustrated in Figure 2, the channels are mel-spaced, with channel centre frequencies spaced linearly from 100 Hz to 1000 Hz at 100 Hz intervals and logarithmically from 1100 Hz to 4000 Hz.

For each time frame, the output of each filter channel is a weighted $B_j$ derived in accordance with the expression:—

$$B_j = \sum_{i=1}^{N} W_{ij} F_i$$

where $B_j$ is the jth mel-frequency channel energy output, $F_i$ are the N spectral magnitudes $1 \leq i \leq N$ from the Fast Fourier Transform, and the $W_{ij}$ are weights defined as:

$$W_{ij} = \begin{cases} 0, & i\Delta f \leq l_j \\ (i\Delta f - l_j)/(k_j - l_j), & l_j \leq i\Delta f \leq k_j \\ (h_j - i\Delta f)/(h_j - k_j), & k_j \leq i\Delta f \leq h_j \\ 0, & i\Delta f \geq h_j \end{cases}$$

for $1 \leq i \leq N$ and $1 \leq j \leq 20$
where $\Delta f = f_s/2N$

and where $l_j$, $k_j$, $h_j$ for $1 \leq j \leq 20$ are the low, center, and high frequencies, respectively of each filter channel, given in Table 1.

The twenty log channel energies of the signal $B_j$ are computed in means 14 according to the expression:—

$$L_j = \log_{10} B_j \text{ for } 1 \leq j \leq 20.$$

The outputs of the filter means and the means 14 are applied to means 16 for computing, respectively, perceptual loudness $C_0$, and the first seven mel-based cepstral coefficients $C_1$, $C_2$,...$C_7$.

The perceptual loudness $C_0$ is the log of a perceptually weighted sum of the channel energies $B_j$ obtained thus:

$$C_0 = 600 \log_{10} \sum_{j=1}^{20} v_j B_j$$

where $v_j \geq 0$ are chosen to correspond to perceptual importance. Suitable values for $v_j$ are illustrated in Table 1 below.

4

TABLE 1

| Filter No. (j) | $l_j$ Hz | $k_j$ Hz | $h_j$ Hz | Loudness weight $v_j$ |
|---|---|---|---|---|
| 1, | 0., | 100., | 200. | .0016 |
| 2, | 100., | 200., | 300. | .0256 |
| 3, | 200., | 300., | 400. | .1296 |
| 4, | 300., | 400., | 500. | .4096 |
| 5, | 400., | 500., | 600. | 1. |
| 6, | 500., | 600., | 700. | 1. |
| 7, | 600., | 700., | 800. | 1. |
| 8, | 700., | 800., | 900. | 1. |
| 9, | 800., | 900., | 1000. | 1. |
| 10, | 900., | 1000., | 1150. | 1. |
| 11, | 1000., | 1150., | 1320. | 1. |
| 12, | 1150., | 1320., | 1520. | 1. |
| 13, | 1320., | 1520., | 1750. | 1. |
| 14, | 1520., | 1750., | 2000. | 1. |
| 15, | 1750., | 2000., | 2300. | 1. |
| 16, | 2000., | 2300., | 2640. | 1. |
| 17, | 2300., | 2640., | 3040. | 1. |
| 18, | 2640., | 3040., | 3500. | 1. |
| 19, | 3040., | 3500., | 4000. | 1. |
| 20, | 3500., | | 4600. | |

The means 16 for obtaining the cer          ə cosine transform of the
log energies, thus:—                         ncti

$$C_i = \sum_{j=1}^{20} L_j \cos \left[ \quad \right.$$

where $1 \leq i \leq 7$.

For further information on computing the coefficients, the reader is directed to a paper by S.B. Davis and P. Mermelstein entitled "Comparison of Parametric Representations for Monosyllabic Word Recognition in Continuously Spoken Sentences", IEEE Transactions on Acoustics and Signal Processing, Vol. ASSP 28 No. 4 pp. 357—366 August 1980.

The output of means 16, which comprises the set of primary parameters $C_1...$, $C_7$ and the perceptually weighted loudness parameter $C_0$, is passed, every 12.8 milliseconds, to utterance endpoint detector 18. The word endpoints are detected by searching for minima of sufficient duration and depth in the perceptual loudness $C_0$ as a function of time frame number. Endpoint detection may be by one of various known methods, for example as disclosed in "An Improved Endpoint Detector for Isolated Word Recognition", L. F. Lamel, L. R. Rabiner, A. E., Rosenburg and J. G. Wilpon, IEEE Trans. on Acoustics, Speech and Signal Processing, Vol. ASSP-29, No. 4, August 1981, p.777—785.

Thereafter the interword intervals or silences are removed, i.e., only the intervening utterance is transmitted. Optionally the number of parameter frames per utterance M may be standardized, for example at M=32, by linearly spaced frame deletion or repetition.

5

The output of the endpoint detector 18 is a sequence of M mel-based cepstra, and is represented by the matrix:—

$$U= \begin{matrix} C_{1,0} \cdots\cdots\cdots C_{1,7} \\ \cdot \quad\quad\quad \cdot \\ \cdot \quad\quad\quad \cdot \\ \cdot \quad\quad\quad \cdot \\ \cdot \quad\quad\quad \cdot \\ C_{M,0} \cdots\cdots\cdots C_{M,7} \end{matrix}$$

This output signal, or recognition unit representation, U, is applieb to dynamic parameter computing means 20 which computes the dynamic parameters as:—

$$\Delta C_{i,j}=C_{i+c,j}-C_{i-d,j}$$

for

$$d+1 \leqq i \leqq M-c, \ 0 \leqq j \leqq 7,$$

where c is the leading frame separation, d is the lagging frame separation. In the specific case, $c=d=2$.

For $1 \leqq i < d+1$
$\Delta C_{i,j}=C_{i+c,j}-C_{i,j}$; and
For $M-c < i \leqq M$
$\Delta C_{i,j}=C_{M,j}-C_{i-d,j}$

These dynamic parameters take account of the human auditory system's propensity for perceiving change in the incoming stimulus.

The sequence of M parameter frames U' comprising primary (static) and secondary (dynamic) parameters, represented by the matrix:—

$$U'= \begin{matrix} C_{1,1} \cdots\cdots\cdots C_{1,7'} \\ \cdot \quad\quad\quad \cdot \\ \cdot \quad\quad\quad \cdot \\ \cdot \quad\quad\quad \cdot \\ \cdot \quad\quad\quad \cdot \\ C_{M,1'} \cdots\cdots\cdots C_{M,7'} \end{matrix} \quad\quad \begin{matrix} \Delta C_{1,0} \cdots\cdots \Delta C_{1,7} \\ \cdot \quad\quad\quad \cdot \\ \cdot \quad\quad\quad \cdot \\ \cdot \quad\quad\quad \cdot \\ \cdot \quad\quad\quad \cdot \\ \Delta C_{M,0'} \cdots\cdots \Delta C_{M,7} \end{matrix}$$

is applied from dynamics computing means 20 to dynamic time warping means 22.

It should be noted that the $C_0$ vectors relating to static loudness are not used.

A corresponding set of templates, including dynamic parameters and a dynamic loudness component $\Delta T_{.,0}$ is derived by means 24 of the form:—

$$T'= \begin{matrix} T_{1,1} \cdots\cdots\cdots T_{1,7'} \\ \cdot \quad\quad\quad \cdot \\ \cdot \quad\quad\quad \cdot \\ \cdot \quad\quad\quad \cdot \\ \cdot \quad\quad\quad \cdot \\ T_{32,1'} \cdots\cdots\cdots T_{32,7'} \end{matrix} \quad\quad \begin{matrix} \Delta T_{1,0} \cdots\cdots\cdots\cdots \Delta T_{1,7} \\ \cdot \quad\quad\quad\quad \cdot \\ \cdot \quad\quad\quad\quad \cdot \\ \cdot \quad\quad\quad\quad \cdot \\ \cdot \quad\quad\quad\quad \cdot \\ \Delta T_{32,0'} \cdots\cdots\cdots\cdots \Delta T_{32,7} \end{matrix}$$

The sequence of parameters for the templates is also applied to dynamic time warping means 22.

The "unknown" parametric representation U' is compared with each of the reference templates T' in turn and the time warp distance computed in each case. The unknown utterance is deemed to be the reference corresponding to the template having the minimum warp distance.

The dynamic time warp computation may be as described by Hunt, Lennig and Mermelstein in a chapter entitled "Use of Dynamic Programming in a Syllable-Based Continuous Speech Recognition System" in *Time Warps, String Edits, and Macromolecules: The Theory and Practice of Sequence Comparison,* D. Sankoff and J. B. Kruskal, eds. Addison-Wesley (Reading MA), pp. 163—187, 1983.

It has been found that a significant improvement in recognition accuracy is obtained by including dynamic parameters in the parametric representation. It has also been found that particularly good results are obtained when the dynamic parameters represent the change in the speech signal between time frames spaced by about 50 milliseconds.

Although described as applied to isolated word recognizers, the invention is also applicable to connected word recognizers and is also useful whether the recognizer is speaker-trained or speaker-independent.

Experimental results using the parameter set augmented with dynamic parameters as described above, in which the primary parameters were the first seven mel-frequency cepstral coefficients, resulted in about 20% reduction in recognition errors in speaker-independent connected digit recognition over the public switched telephone network. In addition to using dynamic parameters corresponding to the first seven mel-based cepstral coefficients, the eighth dynamic parameter corresponding to change in overall loudness further reduced errors by about 10%.

**Claims**

1. A method of recognizing an unknown speech utterance comprising the steps of:

(i) representing said unknown speech utterance as a first sequence of parameter frames, each parameter frame representing a corresponding time frame of said utterance;

(ii) providing a plurality of reference templates, each comprising a second sequence of parameter frames expressed in the same kind of parameters as the first sequence of parameter frames; and

(iii) comparing each of the primary and secondary parameters in the sequence of parameter frames of the unknown utterance with each reference template and determining which of the reference templates most closely resembles the unknown utterance, characterized by:

each parameter frame of the first sequence and second sequence of parameter frames comprising a set of primary parameters and a set of secondary parameters, each of the secondary parameters representing the difference between a primary parameter in one frame and a corresponding primary parameter in another frame, said frames being separated by a specific time interval and

the method including the step of computing a dynamic loudness component as a secondary parameter, and providing a corresponding dynamic loudness component in each of said secondary parameter frames.

2. A method as defined in Claim 1, wherein the time between the centres of different time frames is in the range of 20 to 200 milliseconds.

3. A method as defined in Claim 2, wherein said time is about 50 milliseconds.

4. A method as defined in Claim 1, wherein the secondary parameters are computed in accordance with the expression:—

$$\Delta C_{i,j} = C_{i+c,j} - C_{i-d,j}$$
$$\text{for } d+1 \leq i \leq M-c, 0 \leq j \leq 7$$

where c is the leading frame separation and d is the lagging frame separation both relative to the frame for which the dynamic parameter is being determined.

5. A method as defined in Claim 4, wherein the secondary parameters are computed in accordance with the expression:—

$$\Delta C_{i,j} = C_{i+c,j} - C_{1,j}$$
$$\text{for } 1 \leq i \leq d+1$$

and in accordance with the expression:—

$$C_{i,j} = C_{M,j} - C_{i-d,j}$$
$$\text{for } M-c < i \leq M$$

6. Apparatus for recognizing an unknown speech utterance in a speech signal comprising:—

(i) means (14, 16, 18, 20) for representing an unknown speech utterance as a sequence of parameter frames, each parameter frame representing a corresponding time frame of said utterance;

(ii) means (24) for providing a plurality of reference templates, each comprising a sequence of parameter frames expressed in the same kind of parameters as the first-mentioned parameter frames,

(iii) means (22) for comparing the sequence parameter frames of the utterance with each reference template and determining which of the reference templates most nearly resembles the unkmwn utterance, caracterised by

each parameter frame of the first-mentioned sequence and second-mentioned sequence of parameter frames comprising a set of primary parameters and a set of secondary parameters each of the secondary parameter representing the signed difference between a primary parameter in one frame and a corresponding primary parameter in another frame, said frames being separated by a specific time interval, dynamic loudness being computed as a secondary parameter, a corresponding dynamic loudness component being provided in each of said secondary parameter frames.

7. Apparatus as defined in Claim 6, wherein said means (24) for providing provides each said secondary parameter to represent the signed difference between primary parameters in respective parameter frames derived for time frames that are spaced by a time interval in the range of 20 to 200 milliseconds.

8. Apparatus as defined in Claim 7, wherein the time frames are spaced by about 50 milliseconds centre-to-centre.

9. Apparatus as defined in Claim 6, wherein the means for providing includes means for computing the secondary parameters $\Delta C_{i,j}$ in accordance with the expression:—

$$\Delta C_{i,j} = C_{i+c,j} - C_{i-d,j}$$
$$\text{for } d+1 \leqq i \leqq M-c, \ 0 \leqq j \leqq 7$$

where c is the leading frame separation and d is the lagging frame separation, both relative to the frame for which the dynamic parameter is being determined.

10. Apparatus as defined in Claim 9, wherein said means for computing the secondary parameters does so in accordance with the expression:

$$\Delta C_{i,j} = C_{i+c,j} - C_{i,j}$$
$$\text{for } 1 \leqq i < d+1$$

and in accordance with the expression:—

$$\Delta C_{i,j} = C_{M,j} - C_{i-d,j}$$
$$\text{for } M-c < i \leqq M$$

### Patentansprüche

1. Verfahren zur Erkennung einer unbekannten Sprachäußerung mit den Schritten:

(i) die unbekannte Sprachäußerung wird als eine erste Folge von Parameterrahmen dargestellt, wobei jeder Parameterrahmen einen entsprechenden Zeitrahmen der Äußerung darstellt;

(ii) es wird eine Vielzahl von Referenzmodellen geschaffen, die jeweils eine zweite Sequenz von Parameterrahmen umfassen, ausgedrückt in der gleichen Art von Parametern wie die erste Folge von Parameterrahmen; und

(iii) es wird jeder primäre und sekundäre Parameter in der Folge von Parameterrahmen der unbekannten Äußerung mit jedem Referenzmodell verglichen und bestimmt, welches Referenzmodell am engsten der unbekannten Äußerung ähnelt, dadurch gekennzeichnet, daß:

jeder Parameterrahmen der ersten Folge und der zweiten Folge von Parameterrahmen eine Reihe von Primärparametern und eine Reihe von Sekundärparametern umfaßt, wobei jeder Sekundärparameter die Differenz zwischen einem Primärparameter in einem Rahmen und einem entsprechenden Primärparameter in einem anderen Rahmen darstellt, und die Rahmen durch ein spezifisches Zeitintervall getrennt sind, und das Verfahren den Schritt enthält, daß eine dynamische Lautheitkomponente als ein sekundärparameter errechnet wird und sine entsprechende dynamische Lautheitkomponente in jedem Sekundärparameterrahmen geschaffen ist.

2. Verfahren nach Anspruch 1, bei dem die Zeit zwischen den Zentren unterschiedlicher Zeitrahmen im Bereich von 20 bis 200 ms liegt.

3. Verfahren nach Anspruch 2, bei dem die Zeit etwa 50 ms beträgt.

4. Verfahren nach Anspruch 1, bei dem die Sekundärparameter entsprechend dem Ausdruck berechnet werden:

$$\Delta C_{i,j} = C_{i+c,j} - C_{i-d,j}$$
$$\text{für } d+1 \leqq i \leqq M-c, \ 0 \leqq j \leqq 7,$$

wobei c der vordere Rahmenabstand und d der hintere Rahmenabstand ist, beide bezogen auf den Rahmen, für den der dynamische Parameter bestimmt ist.

5. Verfahren nach Anspruch 4, bei dem die Sekundärparameter entsprechend dem Ausdruck berechnet werden:

$$\Delta C_{i,j} = C_{i+c,j} - C_{i,j}$$
$$\text{für } 1 \leqq i \leqq d+1$$

und entsprechend dem Ausdruck:

$$C_{i,j} = C_{M,j} - C_{i-d,j}$$
$$\text{für } M-c < i \leqq M.$$

6. Vorrichtung zum Erkennen einer unbekannten Sprachäußerung in einem Sprachsignal, mit:

(i) Mitteln (14, 16, 18, 20) zum Darstellen einer unbekannten Sprachäußerung als einer Folge von Parameterrahmen, wobei jeder Parameterrahmen einen entsprechenden Zeitrahmen der Äußerung darstellt;

(ii) Mitteln (24) zum Schaffen einer Vielzahl von Referenzmodellen, die jeweils eine Folge von Parameterrahmen umfassen, ausgedrückt in der gleichen Art von Parametern wie die ersterwähnten Parameterrahmen,

(iii) Mitteln (22) zum Vergleichen der Folge von Parameterrahmen der Äußerung mit jedem Referenzmodell und zum Bestimmen, welches Referenzmodell am engsten der unbekannten Äußerung ähnelt, dadurch gekennzeichnet, daß

jeder Parameterrahmen der ersterwähnten Folge und der zweiterwähnten Folge von Parameterrahmen eine Reihe von Primärparametern und eine Reihe von Sekundärparametern umfaßt, wobei jeder Sekundärparameter eine mit Vorzeichen versehene Differenz zwischen einem Primärparameter in einem Rahmen und einem entsprechenden Primärparameter in einem anderen Rahmen darstellt, wobei die Rahmen durch ein besonderes Zeitintervall getrennt sind,

wobei dynamische Lautheit als ein Sekundärparameter berechnet wird und eine entsprechende dynamische Lautheitkomponente in jedem Sekundärparameterrahmen geschaffen ist.

7. Vorrichtung nach Anspruch 6, bei der das Mittel (24) zum Schaffen jeden Sekundärparameter so schafft, daß die mit Vorzeichen versehene Differenz zwischen Primärparametern in jeweiligen Parametern dargestellt ist, abgeleitet für Zeitrahmen, die durch ein Zeitintervall im Bereich von 20 bis 200 ms getrennt sind.

8. Vorrichtung nach Anspruch 7, bei der die Zeitrahmen etwa 50 ms Mittel zur Mitte getrennt sind.

9. Vorrichtung nach Anspruch 6, bei der die Schaffungsmittel Mittel enthalten zum Errechnen der Sekundärparameter $\Delta C_{\text{Imj}}$ entsprechend dem Ausdruck

$$\Delta C_{\text{I,j}} = C_{\text{I+c,j}} - C_{\text{I-d,j}}$$
$$\text{für } d+1 \leq i \leq M-c, \ 0 \leq j \leq 7,$$

wobei c der vordere Rahmenabstand und d der hintere Rahmenabstand ist jeweils bezogen auf den Rahmen, für den der dynamische Parameter bestimmt ist.

10. Vorrichtung nach Anspruch 9, bei der das Mittel zum Errechnen des Sekundärparameters dieses entsprechend dem Ausdruck vollbringt:

$$\Delta C_{\text{I,j}} = C_{\text{I+c,j}} - C_{\text{I,j}}$$
$$\text{für } 1 \leq i < d+1$$

und entsprechend dem Ausdruck:

$$\Delta C_{\text{I,j}} = C_{\text{M,j}} - C_{\text{I-d,j}}$$
$$\text{für } M-c < i \leq M.$$

**Revendications**

1. Procédé pour reconnaître une uttérance de la parole inconnue, caractérisé en ce qu'il comprend les étapes consistant à:

(i) représenter l'uttérance de la parole inconnue comme une première séquence de trames de paramètres, chaque trame représentant une trame temporelle de l'uttérance;

(ii) fournir une multitude de gabarits de référence, chacun comprenant une seconde séquence de trames de paramètres exprimées dans la même sorte de paramètres que la première séquence de trames de paramètres; et

(iii) comparer chacun des paramètres primaire et secondaire de la séquence de trames de paramètres de l'uttérance inconnue à chaque gabarit de référence et déterminer celui des gabarits de référence qui ressemble le plus étroitement à l'uttérance inconnue, caractérisé en ce que:

chaque trame de paramètres de la première séquence et de la seconde séquence de trames de paramètres comprend un jeu de paramètres primaires et un jeu de paramétres secondaires, chacun des paramètres secondaires représentant la différance entre un paramètre primaire dans une trame et un paramètre primaire correspondant dans une autre trame, les trames étant séparées par un intervalle de temps spécifique et

le procédé comprenant l'étape consistant à calculer une composante dynamique d'intensité sonore comme paramètre secondaire, et à fournir une composante dynamique correspondante d'intensité sonore dans chacun des trames des paramètres secondaires.

2. Procédé selon la revendication 1, dans lequel le temps entre les centres des différentes trames temporelles est compris entre 20 et 200 millisecondes.

3. Procédé selon la revendication 2, dans lequel le temps est environ 50 millisecondes.

4. Procédé selon la revendication 1, dans lequel les paramètres secondaires sont calculés en conformité avec l'expression:

$$\Delta C_{i,j} = C_{i+c,j} - C_{i-d,j}$$
$$\text{pour } d+1 \leqq i \leqq M-c, \ 0 \leqq j \leqq 7$$

où c est la séparation de la trame avant et d la séparation de la trame arrière, toutes deux concernant la trame pour laquelle le paramètre dynamique est en cours de définition.

5. Procédé selon la revendication 4, dans lequel les paramètres secondaires sont calculés en conformité avec l'expression:

$$\Delta C_{i,j} = C_{i+c,j} - C_{i,j}$$
$$\text{pour } I \leqq i \leqq d+1$$

et en conformité avec l'expression:

$$C_{i,j} = C_{M,j} - C_{i-d,j}$$
$$\text{pour } M-c < i \leqq M$$

6. Dispositif pour reconnaître une uttérance de la parole inconnue dans un signal de la parole comprenant:

(i) des moyens (14, 16, 18, 20) pour représenter une uttérance de la parole inconnue comme une séquence de trames de paramètres, chaque trame représentant une trame temporelle correspondante de l'uttérance;

(ii) un moyen (24) pour fournir une multitude de gabarits de référence, chacun comprenant une séquence de trames de paramètres exprimées dans la même sorte de paramètre que les trames de paramètres citées en premier,

(iii) un moyen (22) pour comparer les trames des paramètres de séquence de l'uttérance à chaque gabarit de référence et déterminer celui des gabarits de référence qui ressemble de plus près à l'uttérance inconnue;

caractérisé en ce que:

—chaque trame de paramètres de la séquence mentionnée en premier et de la séquence mentionnée en second lieu des trames de paramètres comprend un jeu de paramètres primaires et un jeu de paramètres secondaires, chacun des paramètres secondaires représentant la différence signée entre un paramètre primaire d'une trame et un paramètre primaire correspondant d'une autre trame, les trames étant séparées par un intervalle de temps spécifique, une composante dynamique d'intensité sonore étant calculée comme un paramètre secondaire, une composante dynamique correspondante d'intensite sonore étant fournie dans chacune des trames de paramètres secondaires.

7. Dispositif selon la revendication 6, dans lequel le moyen (24) de fourniture fournit chaque paramètre secondaire de manière à représenter la différence signée entre paramètres primaires dans des trames respectives de paramétres obtenues pour des trames temporelles qui sont espacées par un intervalle de temps compris dans la gamme allant de 20 à 200 millisecondes.

8. Dispositif selon la revendication 7, dans lequel les trames temporelles sont espacées d'environ 50 millisecondes de centre à centre.

9. Dispositif selon la revendication 6, dans lequel le moyen de fourniture comprend un moyen pour calculer les paramètres secondaires $\Delta C_{i,j}$ en conformité avec l'expression:

$$\Delta C_{i,j} = C_{i+c,j} - C_{i-d,j}$$
$$\text{pour } d+1 \leqq i \leqq M-c, \ 0 \leqq j \leqq 7$$

où c est la séparation de trame avant et d la séparation de trame arrière, toutes deux concernant la trame pour laquelle le paramètre dynamique est en cours de détermination.

10. Dispositif selon la revendication 9, dans lequel le moyen pour calculer les paramètres secondaires procédé à ce calcul en conformité avec l'expression:

$$\Delta C_{i,j} = C_{i+c,j} - C_{i,j}$$
$$\text{pour } I \leqq i < d+1$$

et en conformité avec l'expression:

$$\Delta C_{i,j} = C_{M,j} - C_{i-d,j}$$
$$\text{pour } M-c < i \leqq M.$$

FIG. I

FIG. 2a

FIG. 2b